# FASCICULE DE BREVET EUROPEEN

(11) **EP 2 438 210 B1**
(45) Date de publication et mention de la délivrance du brevet: **10.05.2017**
(21) Numéro de dépôt: 10734217.2
(22) Date de dépôt: 03.06.2010
(51) Int. Cl.: C23F 1/46, C23G 1/36, C01G 23/00

(54) **PROCEDE DE REGENERATION D'UNE SOLUTION DE DECAPAGE OU D'USINAGE CHIMIQUE DE TITANE**
VERFAHREN ZUR REGENERIERUNG EINER LÖSUNG ZUR ABBEIZUNG ODER CHEMISCHEN FRÄSUNG VON TITAN
METHOD FOR REGENERATING A SOLUTION USED FOR PICKLING OR CHEMICALLY MILLING TITANIUM

(30) Priorité: 05.06.2009 FR 0953719
(43) Date de publication de la demande: 11.04.2012
(73) Titulaire: Airbus Operations (S.A.S.), 31060 Toulouse (FR); Mecaprotec Industries, 31600 Muret (FR)
(72) Inventeur: CROS, Caroline, F-31600 Muret (FR); BARES, Pierre, F-31220 Mondavezan (FR)
(74) Mandataire: Ipside
(86) Numéro de dépôt international: PCT/FR2010/051085
(87) Numéro de publication internationale: WO 2010/139902

(56) Documents cités:
- EP-A- 0 317 210
- EP-A- 0 331 231
- WO-A-2008/133076
- DE-A1- 2 828 547
- US-A- 2 876 144
- US-A- 3 048 503
- US-A- 4 105 469
- US-A- 4 943 419

## Description

La présente invention s'inscrit dans le domaine du traitement physico-chimique des bains d'attaque chimique du titane, plus particulièrement des bains de décapage et/ou d'usinage à base d'acide fluorhydrique et d'acide nitrique. Elle concerne un procédé de régénération d'une solution d'attaque acide du titane usagée.

On entend ici par solution usagée une solution ayant déjà été utilisée pour un certain nombre d'opérations d'attaque chimique du titane, qu'elle soit toujours en état de fonctionnement ou pas. Dans la présente description, le terme régénération comprend ainsi aussi bien la remise en état de fonctionnement d'une solution considérée comme devenue inopérante, que le maintien en état de fonctionnement d'une solution toujours opérante.

Le titane, de par ses propriétés particulièrement avantageuses en termes notamment de tenue à la corrosion, de résistance mécanique et de faible densité, est largement utilisé pour la constitution de pièces structurales, notamment dans le domaine aéronautique.

Dans la présente description on entend par titane, aussi bien le titane pur (c'est-à-dire avec un degré de pureté supérieur à 99%), que les alliages de titane. Un exemple d'un tel alliage couramment répandu, connu sous le nom d'alliage Ti-6AI-4V, comprend, outre le titane en lui-même, 6% d'aluminium et 4% de vanadium.

Lors des opérations de fabrication des pièces mécaniques en titane, celles-ci se chargent en surface d'oxydes, de poussières, de copeaux métalliques et d'autres impuretés de surface. La préparation chimique permet d'éliminer ces impuretés de manière à conférer à la pièce un état de surface satisfaisant pour son traitement ultérieur en fonction de l'utilisation visée. Les pièces en titane peuvent également être soumises à des opérations d'usinage chimique, dans le cadre par exemple des allègements de structures.

Le décapage et l'usinage chimique du titane s'effectuent de façon courante dans un bain contenant un mélange d'acide fluorhydrique HF et d'acide nitrique HNO₃, additionné le cas échéant d'agents tensioactifs. L'acide fluorhydrique a pour rôle d'attaquer le métal par corrosion. L'acide nitrique, quant à lui, d'une part réduit l'adsorption d'hydrogène par le titane, et d'autre part modère la vitesse d'attaque par le HNO₃. Les concentrations de ces acides dans le bain sont choisies différemment selon que l'on souhaite réaliser le décapage ou l'usinage du substrat.

Le décapage ou l'usinage chimique du titane s'effectuent par immersion du matériau dans le bain, pendant un temps qui est déterminé en fonction du résultat souhaité. Lors de cette immersion, le titane réagit avec l'acide fluorhydrique. On peut penser qu'il se produit dans le bain au moins les réactions principales suivantes :

3 Ti + 4 HNO₃ + 12 HF → 3 TiF₄ + 4 NO + 8 H₂O (a)

Ti + 4 HNO₃ + 6 HF → H₂TiF₆ + 4 NO₂ + 4 H₂O (b)

une incertitude existant quant à la forme exacte des sels de titane formés en produits intermédiaires dans la solution (TiF₄ notamment).

Lors de ces réactions, les acides sont consommés et la concentration de titane dissous augmente dans le bain. Il est constaté qu'en dehors de certaines plages de concentration respectivement en HF et en HNO₃, dites plages opérantes, le bain perd son efficacité. De même, en dehors de certaines plages de concentration dites opérantes en titane dissous dans le bain, évaluées à environ 0 à 20 g/l pour les bains de décapage et 10 à 40 g/l pour les bains d'usinage, il a été observé que l'efficacité du décapage ou de l'usinage de la pièce devenait insuffisante, ceci étant associé à une altération du matériau de base. On considère alors le bain comme devenu inopérant.

Dans de tels cas, il est par conséquent nécessaire de changer de bain. Or de tels bains acides s'avèrent très dangereux et ils doivent être traités avant de pouvoir être rejetés dans le milieu naturel. Il a donc été recherché dans l'art antérieur des solutions pour traiter les bains acides de décapage ou d'usinage du titane. Le traitement de tels bains acides étant long et coûteux à réaliser, et posant en outre des problèmes environnementaux, la recherche s'est plutôt orientée vers des solutions permettant de remettre ces bains en état de fonctionnement de manière à permettre de les réutiliser.

A cet effet, il a été proposé dans l'art antérieur une solution pour éliminer le titane dissous dans le bain, procédant par ajout de nitrate de potassium KNO₃ dans ce dernier, de manière à former un sel K₂TiF₆, ou hexafluorotitanate de potassium, vraisemblablement selon les réactions :

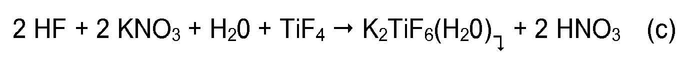

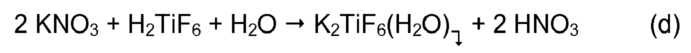

Le sel de K₂TiF₆ précipite en milieu aqueux, et il peut ainsi être relativement facilement éliminé du bain, la reconstitution de ce dernier étant ensuite finalisée par addition d'acide fluorhydrique et d'acide nitrique de manière à ramener leurs concentrations respectives à un niveau adéquat pour le décapage ou l'usinage des pièces.

Dans le même objectif, une autre solution proposée par l'art antérieur consiste à ajouter du fluorure de potassium KF dans le bain, de manière à former également un sel de K₂TiF₆, vraisemblablement selon les réactions :

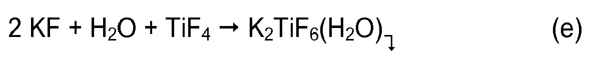

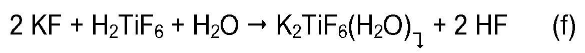

Après élimination du précipité formé, le bain est rééquilibré par ajout d'acide nitrique et d'acide fluorhydrique.Le document US 4 943 419 divulgue un procédé de récupération d'un sel de métal alcalin de fluorure de titanium, en particulier de K₂TiF₆, à partir de bains usagés d'attaque acide contenant du titane. Les concentrations en HF et en HNO₃ sont régulièrement ajustées par ajout de HF et HNO₃.

Le document WO 2008/133076 divulgue un procédé de fabrication d'une solution aqueuse réutilisable pour le lavage acide du titane, à partir d'une solution d'attaque acide contenant du HF et du HNO₃. Selon le procédé, il est ajouté à la solution usagée du KF ou du KNO₃, de sorte à provoquer la précipitation de K₂TiF₆.

Le document US 3 048 503 décrit un procédé de maintien en état de fonctionnement d'un bain d'attaque acide du titane contenant du HF et du HNO₃, par un contrôle et un maintien des concentrations de ces acides dans le bain. Ce contrôle est réalisé par ajout de HF et HNO₃. De telles solutions proposées par l'art antérieur sont relativement coûteuses à mettre en oeuvre, en particulier du au fait qu'elles sont consommatrices de quantités importantes de réactifs pour assurer la reconstitution complète du bain, certains de ces réactifs, en particulier l'acide fluorhydrique, présentant un coût d'achat élevé.

La présente invention vise à remédier aux inconvénients des procédés de traitement des solutions d'attaque chimique du titane existants, notamment à ceux exposés ci-avant, en proposant un procédé de régénération d'une telle solution qui soit à la fois efficace et simple à mettre en oeuvre, tout en présentant un coût d'opération réduit.

A cet effet, elle propose un procédé de régénération d'une solution usagée d'attaque chimique du titane à base d'acide fluorhydrique et d'acide nitrique, contenant du titane dissous, qui comprend la détermination des concentrations en acide fluorhydrique et en acide nitrique dans la solution, la comparaison de chacune des valeurs ainsi mesurées respectivement avec une valeur seuil minimale prédéterminée associée, et l'addition dans la solution de KF et/ou de KNO₃ lorsque la concentration respectivement en HF et/ou HNO₃ dans la solution est inférieure à la valeur seuil associée, de manière à former respectivement du HF et/ou du HNO₃ dans la solution par réaction avec le titane dissous.

Cette addition est effectuée dans des quantités permettant d'assurer dans la solution, après réaction avec le titane, une concentration en HF et/ou HNO₃ au moins supérieure à la borne inférieure de la plage de concentration opérante associée. Il est à la portée de l'homme du métier de déterminer les bornes inférieure et supérieure de chacune de ces plages, en dehors desquelles la solution est considérée comme inopérante pour le décapage, ou selon les cas l'usinage, du titane.

Pour chacun des acides, la valeur seuil de concentration minimale est de préférence associée à une seconde valeur seuil de concentration prédéterminée, dite maximale, qu'il est préférable de ne jamais dépasser. Ainsi, les concentrations en HF et HNO₃ dans la solution sont associées chacune respectivement à une valeur seuil dite maximale prédéterminée, et le KF et/ou le KNO₃ sont ajoutés dans la solution dans des quantités telles que les concentrations en HF et HNO₃ dans la solution restent toujours inférieures aux valeurs seuils maximales respectivement associées. Chaque valeur seuil maximale déterminée selon l'invention correspond de préférence avantageusement respectivement à la borne supérieure de la plage de concentration opérante fixée pour l'acide associé.

Selon une caractéristique avantageuse de l'invention, la valeur seuil minimale pour chacun des acides est choisie à l'intérieur de la plage de concentration opérante correspondante. Elle peut par exemple être sensiblement égale à la borne inférieure de cette plage. Dans des modes de mise en oeuvre préférés de l'invention, elle est cependant choisie sensiblement au centre de la plage opérante, de sorte que l'ajout de KF et/ou KNO₃ est déclenché alors que la solution se trouve encore largement dans des conditions de fonctionnement acceptables. On s'assure ainsi avantageusement du maintien permanent de la solution en état de fonctionnement opérant.

L'addition de KF et/ou de KNO₃ permet avantageusement de former dans la solution, selon des mécanismes réactionnels vraisemblablement tels qu'illustrés par les équations (c) à (f) ci-dessus, par réaction avec le titane dissous présent dans la solution, respectivement du HF et/ou du HNO₃, en même temps que de l'hexafluorotitanate de potassium, ou K₂TiF₆, qui tend à précipiter dans le milieu réactionnel aqueux. Par une même opération, on réalise par conséquent avantageusement à la fois l'élimination du titane dissous de la solution, par formation d'un sel de K₂TiF₆ qui précipite et qui peut par conséquent être facilement séparé de la solution, et le rétablissement ou le maintien de concentrations opérantes des acides dans la solution.

Les quantités de KF et de KNO₃ à ajouter dans la solution sont déterminées, conformément aux préconisations ci-avant, selon des calculs entièrement à la portée de l'homme du métier, en considérant notamment les réactions (c) à (f) ci-dessus du KF et du KNO₃ avec le titane dissous, ou encore selon des modalités déterminées et validées expérimentalement.

Le choix d'utiliser des sels de potassium conformément à l'invention s'avère notamment tout à fait avantageux du fait de la faible solubilité de l'hexafluorotitanate de potassium en milieu aqueux, en comparaison avec d'autres sels tels que l'hexafluorotitanate de sodium, d'ammonium, ou pire de calcium ou d'aluminium, qui sont plus solubles.

Le cas échéant, le rééquilibrage du bain est finalisé par addition de HF et/ou de HNO₃ dans la solution, en quantités très réduites.

Selon une caractéristique avantageuse de l'invention, le procédé comprend en outre la détermination de la concentration de titane dans la solution, la comparaison de la valeur ainsi mesurée avec une valeur limite prédéterminée, et lorsque la valeur mesurée est supérieure à cette valeur limite, l'addition dans la solution de KF et de KNO₃.

La valeur limite est avantageusement choisie comprise à l'intérieur de la plage opérante de concentration fixée pour le titane, c'est-à-dire par exemple entre 0 et 20 g/l pour les solutions de décapage et entre 10 et 40 g/l pour les solutions d'usinage.

Dans des modes de mise en oeuvre préférés de l'invention, cette valeur limite est choisie sensiblement au milieu de la plage correspondante. Par le choix d'une telle valeur largement inférieure aux valeurs de concentration en titane dissous pour lesquelles on considère que la solution est devenue inopérante, c'est-à-dire 20 g/l pour une solution de décapage et 40 g/l pour une solution d'usinage, on s'assure avantageusement que la solution sera traitée par ajout de KF et de KNO₃ bien avant de sortir des tolérances de fonctionnement. La solution peut par conséquent toujours être maintenue en état de fonctionnement.

Selon une caractéristique avantageuse de l'invention, l'ajout de KF et de KNO₃ est en outre avantageusement réalisé dans des quantités telles que la concentration finale en titane dans la solution soit maintenue à l'intérieur de la plage de concentration opérante correspondante.

Dans un tel cadre, dans des modes de mise en oeuvre préférés de l'invention, le KF et le KNO₃ sont additionnés en quantités molaires déterminées stoechiométriquement relativement aux réactions de KF et KNO₃ avec le titane dissous. La détermination de ces quantités s'effectue selon des calculs à la portée de l'homme du métier, par exemple sur la base des équations (c) à (f) ci-dessus, en incorporant de manière générale deux moles de KF et KNO₃ pour une mole de titane dissous.

Les quantités ajoutées sont de préférence choisies pour être très légèrement inférieures aux valeurs stoechiométriques ainsi déterminées de sorte à s'assurer que l'intégralité du KF et du KNO₃ incorporés dans la solution seront consommés par leur réaction avec le titane dissous. On évite ainsi avantageusement tout risque de précipitation ultérieure de K₂TiF₆ dans la solution à partir du potassium issu du KF et/ou du KNO₃ en excès, et du titane présent ou à venir dans la solution.

L'ajout de KF et de KNO₃ est en outre de préférence réalisé dans des quantités déterminées en fonction des concentrations mesurées en acides HF et HNO₃ dans le bain, de manière à s'assurer d'atteindre, après réaction avec le titane dissous, des concentrations en chacun de ces acides dans la solution se trouvant à l'intérieur des plages de concentration opérantes respectivement associées à chaque acide.

Le procédé selon l'invention s'avère notamment tout à fait avantageux en ce qu'il assure un rééquilibrage du bain sans nécessiter, ou très peu, d'addition de HF et/ou de HNO₃ dans ce dernier. L'élimination du titane qui a été dissous dans le bain est réalisée en même temps que le rétablissement de concentrations en HF et HNO₃ adéquates pour une attaque chimique efficace et maîtrisée du titane. Le procédé selon l'invention est de préférence mis en oeuvre de manière à assurer d'atteindre après régénération des valeurs optimales de concentration des acides, qui sont prédéterminées à l'intérieur des plages de concentration opérantes, ces valeurs optimales correspondant avantageusement sensiblement aux valeurs seuil minimales pour le HF et le HNO₃, définies conformément à l'invention. Le procédé selon l'invention permet avantageusement aussi bien de ramener dans un état de fonctionnement adéquat une solution étant considérée comme devenue inopérante, que, par une mise en oeuvre régulière, de maintenir une solution sensiblement en permanence dans des tolérances de fonctionnement.

Ainsi, par une mise en oeuvre régulière, voire sensiblement continue, de ce procédé, il est avantageusement possible selon l'invention de maintenir la solution dans un état sensiblement stable dans le temps, de sorte qu'elle conserve une efficacité sensiblement constante, et ce pour un coût relativement modéré, en particulier bien inférieur au coût de mise en oeuvre des procédés de traitement proposés par l'art antérieur.

Selon une caractéristique avantageuse de l'invention, la détermination de la concentration des différentes espèces présentes dans la solution est réalisée à partir d'un même échantillon prélevé dans la solution, par une même méthode de dosage, de préférence par titrage acido-basique, par exemple au moyen d'hydroxyde de tétra-n-butylammonium, selon une méthode classique en elle-même.

Dans des modes de mise en oeuvre préférés de l'invention, lors de la régénération la solution est maintenue à la température ambiante au moins pendant une période de 2 à 4 heures après l'addition de KF et/ou KNO₃. De telles conditions opératoires favorisent avantageusement la cristallisation de l'hexafluorotitanate de potassium formé consécutivement à l'addition de KF et/ou de KNO₃ dans la solution.

Dans des modes de mise en oeuvre préférés de l'invention, la solution est une solution de décapage du titane et les plages de concentration opérantes sont fixées à 9 à 22 g/l pour le HF, 143 à 430 g/l pour le HNO₃ et à 0 à 20 g/l pour le titane. Les valeurs seuils minimales sont fixées à environ 15 g/l pour l'acide fluorhydrique et environ 287 g/l pour l'acide nitrique, et la valeur limite est fixée à environ 10 g/l pour le titane.

Dans d'autres modes de mise en oeuvre préférés de l'invention, la solution est une solution d'usinage du titane et les plages de concentration opérantes sont fixées à 9 à 22 g/l pour le HF, 80 à 120 g/l pour le HNO₃ et à 10 à 40 g/l pour le titane. Les valeurs seuils minimales sont fixées à environ 15 g/l pour l'acide fluorhydrique et environ 100 g/l pour l'acide nitrique, et la valeur limite est fixée à environ 25 g/l pour le titane.

Suivant une caractéristique avantageuse de l'invention, le procédé comporte une étape de séparation d'un précipité d'hexafluorotitanate de potassium K₂TiF₆ formé dans la solution consécutivement à l'addition de KF et/ou de KNO₃, par réaction de ces composés avec le titane dissous.

L'hexafluorotitanate de potassium K₂TiF₆ obtenu par le procédé selon l'invention se caractérise notamment, après une étape de rinçage à l'eau suivie d'une étape de séchage, par une pureté supérieure à 99%. Sans un tel traitement, il présente une pureté légèrement inférieure.

Les applications de l'hexafluorotitanate de potassium formé sont multiples, par exemple la catalyse de la synthèse du polypropylène, la fabrication des alliages d'aluminium et de bore, la fabrication du titane, l'ignifugation, le traitement de surfaces d'aluminium.

L'invention concerne également un procédé de maintien en état de fonctionnement d'un bain d'attaque chimique du titane à base d'acide fluorhydrique et d'acide nitrique, utilisé de façon sensiblement continue, comprenant la mise en oeuvre régulière d'un procédé de régénération selon l'invention sur une fraction isolée du bain, et la réintroduction de la fraction ainsi régénérée dans le bain. Un tel procédé permet avantageusement d'entretenir le bain dans des tolérances de fonctionnement sans interrompre durant un temps significatif sa mise en oeuvre pour le décapage ou l'usinage du titane. La fraction régénérée conformément à l'invention représente par exemple un tiers ou la moitié du volume total du bain. La régénération d'une fraction isolée du bain, suivie de la réintroduction de la fraction régénérée dans le bain, peuvent être mises en oeuvre à intervalles réguliers, par exemple quotidiennement ou hebdomadairement, en fonction de la cadence d'utilisation du bain. Elles peuvent également être mises en oeuvre de façon continue, au moyen d'une pompe assurant un prélèvement continu de solution dans le bain, la circulation de la solution prélevée à travers un dispositif de mise en oeuvre du procédé de régénération selon l'invention, puis sa réintroduction dans le bain. Le débit de la pompe est alors ajusté en fonction de la cadence d'utilisation du bain pour des opérations de décapage ou d'usinage, et par conséquent du taux de titane se dissolvant dans le bain. Une telle mise en oeuvre en continu permet avantageusement de maintenir une concentration en titane sensiblement constante dans le bain, en assurant l'élimination du titane au fur et à mesure de sa dissolution.

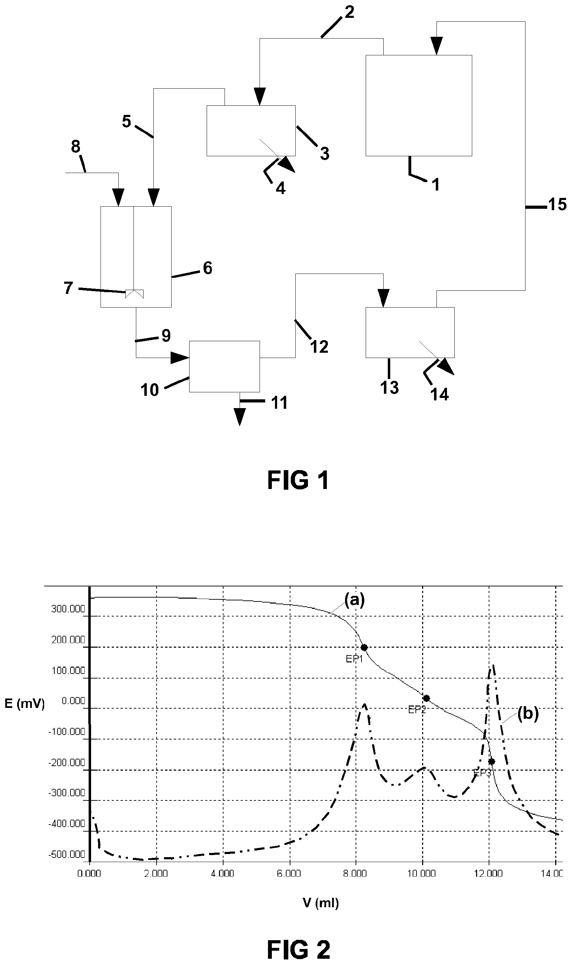

L'invention sera maintenant plus précisément décrite dans le cadre des exemples donnés ci-après à simple titre illustratif, qui ne doivent nullement être interprétés comme limitatifs de l'invention, et en regard des figures 1 et 2 dans lesquelles :
- la figure 1 illustre de façon schématique un dispositif de mise en oeuvre d'un procédé de régénération selon l'invention,
- et la figure 2 représente une courbe de dosage des espèces en présence dans une solution d'attaque acide du titane, par une méthode de titrage acido-basique conformément à l'invention.

A titre d'exemple, pour une solution de décapage du titane, les plages de concentration opérantes pour les différentes espèces présentes dans la solution sont les suivantes :

| | |
|---|---|
| HF | 9 à 22 g/l |
| HNO₃ | 143 à 430 g/l |
| Ti | 0 à 20 g/l |

Pour une solution d'usinage, ces plages sont les suivantes :

| | |
|---|---|
| HF | 9 à 22 g/l |
| HNO₃ | 80 à 120 g/l |
| Ti | 10 à 40 g/l |

Pour une solution à base de HF et de HNO₃ ayant déjà été utilisée pour une ou plusieurs opérations de décapage ou d'usinage du titane, il est réalisé selon l'invention un dosage des différents composés présents dans la solution.

Les valeurs seuil minimales fixées selon l'invention pour l'acide fluorhydrique et l'acide nitrique s'inscrivent chacune à l'intérieur de la plage de concentration opérante correspondante ci-dessus. Dans des modes de réalisation préférés de l'invention, elles sont chacune choisies sensiblement au centre de la plage associée. Tout autre choix de valeur entre cependant également dans le cadre de l'invention, par exemple une valeur correspondant à la borne inférieure de la plage.

Les valeurs seuil maximales définies selon l'invention pour chacun des acides sont de préférence mais non limitativement respectivement égales aux bornes supérieures des plages ci-dessus.

La valeur limite pour le titane est de même de préférence fixée à l'intérieur de la plage de concentration opérante correspondante définie ci-dessus, de préférence sensiblement au centre de cette plage, toute autre valeur entrant cependant également dans le cadre de l'invention.

Lorsque la concentration en HNO₃ mesurée dans la solution est inférieure à la valeur seuil minimale correspondante, on rajoute dans celle-ci une quantité de KNO₃ déterminée selon des calculs à la portée de l'homme du métier, de manière à obtenir dans la solution une concentration en HNO₃ qui soit comprise à l'intérieur de la plage de concentration opérante associée, et de préférence proche de la valeur seuil minimale fixée, le HNO₃ étant généré par réaction du KNO₃ avec le titane dissous dans la solution, vraisemblablement au moins selon la réaction suivante se produisant alors :

2 KNO₃ + H₂TiF₆ + H2O → K₂TiF₆(H₂0) + 2 HNO₃

Lorsque c'est la concentration en HF qui est inférieure à la valeur seuil minimale correspondante, on procède de la même façon pour régénérer du HF dans la solution, en ajoutant du KF dans la quantité adéquate, de manière à provoquer la réaction vraisemblablement la suivante :

2 KF + H₂TiF₆ + H₂O → K₂TiF₆(H₂0) + 2 HF

L'ajout de KF et de KNO₃ peut être simultané si les concentrations en HF et HNO₃ sont toutes deux inférieures respectivement à la valeur seuil minimale associée.

Dans tous les cas, au moins une partie du titane dissous présent dans la solution réagit pour former du K₂TiF₆, qui précipite et qui peut être éliminé de la solution. Ceci a pour effet de faire diminuer la concentration en titane dissous dans la solution.

Lorsque la concentration en titane est supérieure à la valeur limite correspondante, on introduit dans le bain à la fois du KF et du KNO₃ en proportions molaires déterminées stoechiométriquement par rapport aux réactions qu'ils produisent avec le titane dissous, de manière à faire diminuer la concentration en titane dissous dans la solution, dans la limite de la plage de concentration opérante associée, tout en évitant les excès qui seraient susceptibles d'induire un risque de précipitation postérieure de ces sels dans la solution.

A titre d'exemple, pour une solution de décapage du titane, d'un volume de 2 800 l, on peut ajouter les quantités de KF et de KNO₃, en fonction des concentrations en titane dissous dans la solution, indiquées dans le tableau 1 ci-après.

**Tableau 1 - Concentrations en KNO₃ et KF à ajouter dans le bain en fonction de la teneur en titane**

| [Ti] en g/l | KNO₃ (g/l) | KF (g/l) |
|---|---|---|
| 10 | 40,1 | 23,1 |
| 11 | 44,2 | 25,4 |
| 12 | 48,2 | 27,6 |
| 13 | 52,2 | 29,9 |
| 14 | 56,1 | 32,3 |
| 15 | 60,1 | 34,6 |
| 16 | 64,2 | 36,9 |
| 17 | 68,2 | 39,2 |
| 18 | 72,2 | 41,5 |
| 19 | 76,2 | 43,8 |
| 20 | 80,3 | 46,1 |

Ces valeurs sont légèrement inférieures, d'environ 5%, aux valeurs déterminées stoechiométriquement par rapport aux réactions du KF et du KNO₃ avec le titane.

La mise en oeuvre du procédé selon l'invention permet, par un simple ajout de KF et/ou KNO₃ dans la solution, dans des quantités déterminées en fonction du résultat du dosage réalisé, aussi bien de ramener à un état de fonctionnement une solution devenue hors d'usage, que de maintenir dans des tolérances de fonctionnement une solution déjà utilisée ou en cours d'utilisation.

En particulier, le procédé selon l'invention permet avantageusement d'assurer le maintien en état de fonctionnement d'un bain d'attaque acide du titane utilisé de façon régulière, voire en continu, par des régénérations successives de fractions de ce bain.

Comme illustré sur la figure 1, à titre d'exemple, à partir d'un bain d'attaque acide à base d'acide fluorhydrique et d'acide nitrique en cours d'utilisation, et contenu dans une cuve de travail 1, on prélève une fraction 2 du bain qui est amenée jusqu'à une première cuve tampon 3. Depuis cette cuve tampon est réalisé le dosage 4 du HF, du HNO₃ et du titane dissous dans la solution, selon une méthode qui sera décrite plus précisément ci-après. La fraction est ensuite amenée, comme indiqué en 5, dans un réacteur 6 pourvu de moyens d'agitation 7 classiques en eux-mêmes. La fraction se trouve dans ce réacteur à la température ambiante.

En fonction du résultat du dosage, les quantités adéquates de KF et de KNO₃ sont introduites en 8 dans le réacteur, et le mélange est agité pendant une durée de 2 à 4 heures, toujours à la température ambiante, de manière à permettre la réaction entre le titane dissous et le KF et/ou le KNO₃. Il se forme dans la solution un précipité d'hexafluorotitanate de potassium qui tend à se déposer au fond du réacteur.

La solution est ensuite amenée, comme indiqué en 9, jusqu'à une unité de filtration 10 où est réalisée la séparation entre le précipité de K₂TiF₆, qui est récupéré en 11, et le filtrat, qui est conduit en 12 jusqu'à une seconde cuve tampon 14 dans laquelle est effectué un nouveau dosage de contrôle des concentrations des espèces HF, HNO₃ et Ti en présence dans la solution ainsi régénérée.

La solution est ensuite ramenée, comme indiqué en 15, jusqu'à la cuve de travail 1, dans laquelle elle est réintroduite dans le bain d'attaque chimique.

Durant toutes ces opérations, le bain a pu continuer à être utilisé pour le décapage ou l'usinage du titane. Par une mise en oeuvre régulière du procédé tel qu'exposé ci-avant, sur des fractions du bain successives, représentant par exemple chacune environ un tiers du volume du bain, le bain est maintenu sensiblement en permanence dans un état d'opérabilité optimal.

Le procédé selon l'invention peut aussi bien être mis en oeuvre à intervalles de temps réguliers qu'en continu, au moyen d'une pompe assurant la circulation continue de solution extraite du bain à travers le circuit de régénération décrit ci-avant.

La méthode de dosage utilisée dans le cadre du procédé selon l'invention est de préférence choisie pour permettre de mesurer en même temps à la fois les concentrations en HF, en HNO₃ et en Ti dans la solution usagée.

Dans des modes de mise en oeuvre préférés de l'invention il s'agit d'une méthode de titrage au TBaOH, pour hydroxyde de tétra-n-butylammonium, en milieu alcoolique.

Toute autre méthode connue de l'homme du métier permettant d'évaluer la concentration de ces trois espèces dans la solution entre également dans le cadre de l'invention. En particulier, le dosage peut être réalisé par chromatographie et spectroscopie d'absorption sur un échantillon de solution par exemple, cette méthode présentant cependant l'inconvénient d'être plus complexe et plus coûteuse à mettre en oeuvre.

### Exemple 1

A titre d'exemple, le dosage au TBaOH est réalisé comme suit.

Une électrode de verre combinée Ag/AgCl avec une solution saturée de LiCl dans l'éthanol comme électrolyte, est immergée dans une solution de 60 ml d'éthanol absolu et de 0,2 ml d'un échantillon prélevé dans le bain d'attaque acide.

Le dosage est effectué en titrant avec une solution de TBaOH à 0,1 N dans un mélange de 2-propanol et de méthanol. Les acides et le titane sont dosés successivement à partir du même échantillon du bain. Les points d'équivalence successifs, correspondant chacun respectivement à une des espèces en présence, sont repérés grâce à la variation de potentiel entre deux bornes de l'électrode combinée suite à la neutralisation des acides par le TBaOH.

On utilise un titroprocesseur pour établir une courbe E (mV / (Ag/AgCl)) en fonction de V (ml). La courbe obtenue est illustrée en trait continu sur la figure 2 (courbe (a)). Sur cette figure est également représentée, en pointillés, la courbe correspondant à la dérivée de la courbe de dosage (courbe (b)), qui permet de repérer plus précisément les points d'inflexion sur cette dernière.

Trois points d'inflexion, EP1, EP2 et EP3, sont observés sur la courbe.

Dans le milieu acide et fluoré le titane est principalement présent sous la forme d'un diacide H₂TiF₆. Ce composé présente deux acidités, dont les pKa sont proches respectivement de celui du HNO₃ et de celui du HF.

Ainsi, le premier point d'inflexion EP1 correspond aux réactions :

HNO₃ + TBaOH → TBaNO₃ + H₂O

H₂TiF₆ + TBaOH → TBaHTiF₆ + H₂O

Le second point d'inflexion EP2 correspond aux réactions :

HF + TBaOH → TBaF + H₂O

TBaHTiF₆ + TBaOH → TBa₂TiF₆ + H₂O

Le troisième point d'inflexion EP3 correspond quant à lui à la réaction de TBa₂TiF₆ avec TBaOH.

On détermine les volumes de TBaOH versés correspondant à chaque point d'inflexion sur la courbe, et on en déduit, par des calculs à la portée de l'homme du métier, les concentrations en HNO₃, HF et Ti dans le bain, en appliquant un facteur correctif pour s'affranchir de la neutralisation de H₂TiF₆ aux premier et second point d'équivalence, ce facteur étant évalué expérimentalement à 0,251.

### Exemple 2

Le procédé de régénération selon l'invention est mis en oeuvre sur une solution usagée standard de décapage du titane de 1000 l provenant d'un bain de travail de 2 800 l.

Les concentrations en HF, HNO₃ et Ti dans la solution sont mesurées selon la méthode au TBaOH comme indiqué dans l'Exemple 1. On détermine les concentrations suivantes : [HF] = 12,2 g/l, [HNO₃] = 235 g/l, [Ti] = 20 g/l.

Les valeurs seuils ont été fixées à : au minimum, 15 g/l de HF et 287 g/l de HNO₃, et au maximum : 10 g/l de Ti.

Les concentrations en HF et HNO₃ dans la solution sont chacune inférieure à la valeur seuil minimale associée, et la concentration en titane est supérieure à la valeur limite fixée.

On introduit dans la solution à traiter du KF et du KNO₃ dans les concentrations respectives suivantes :
[KF] = 46,1 g/l, [KNO₃] = 80,3 g/l, soit respectivement 46,1 kg et 80,3 kg.

La solution est agitée à une température d'environ 25°C. On observe au bout de quelques minutes la formation d'un précipité blanc de K₂TiF₆. Ce précipité accumulé au fond du réacteur est éliminé du bain, par exemple par filtration.

Le sel K₂TiF₆ obtenu peut être rincé à l'eau et/ou séché en étuve. Il présente une pureté supérieure à 99 %, une granulométrie moyenne de 100 µm, une surface spécifique de 0,083 m²/g.

La solution après filtration est introduite dans la cuve tampon 13 et un nouveau dosage selon la méthode au TBaOH de l'Exemple 1 est immédiatement réalisé sur elle, de manière à déterminer les nouvelles concentrations en HF, HNO₃ et Ti. Ces concentrations mesurées sont les suivantes :
[HF] = 14,9 g/l, [HNO₃] = 248,8 g/l, [Ti] = 2,7 g/l

Ces valeurs témoignent d'une solution correctement rééquilibrée en teneurs en HF, HNO₃, et Ti, puisqu'elles s'inscrivent chacune à l'intérieur de la plage de concentration opérante associée, et qu'elles sont proches pour les acides de la valeur seuil minimale fixée.

La solution ainsi régénérée est par la suite réintroduite dans la cuve de travail 1. En fonction du résultat des analyses en acides, un ajustement en HNO₃ et/ou HF peut être réalisé, par des quantités très réduites de ces acides. Dans l'exemple ci-avant, un tel ajustement n'est pas nécessaire. Ce procédé présente l'avantage de réaliser les régénérations en parallèle de la cuve de travail et ainsi de toujours laisser cette dernière libre pour le traitement du titane.

L'efficacité du bain d'attaque chimique ainsi rééquilibré est évaluée au moyen d'une éprouvette en Ti-6AI-4V de dimensions 125 x 80 mm. Cette éprouvette est immergée dans le bain pendant 2 minutes. On mesure la vitesse d'attaque, qui doit être comprise entre 2 et 9 µm/min/face, la rugosité de surface de la pièce, qui doit rester inférieure à 2 µm, l'absorption d'hydrogène, qui doit rester inférieure à 50 ppm, et on évalue visuellement l'état de surface de la pièce, le tout selon des méthodes classiques en elles mêmes.

La vitesse d'attaque est mesurée à une valeur égale à 3,1 µm/min/face, qui est tout à fait satisfaisante.

La rugosité est mesurée à une valeur de 0,80 µm, également satisfaisante.

L'aspect extérieur du matériau est légèrement marbré, et acceptable.

Des mesures d'absorption d'hydrogène sont également réalisées, et aboutissent à une valeur de 8 ppm.

Ces résultats montrent que le bain rééquilibré conformément à l'invention retrouve une bonne efficacité d'attaque chimique du titane. Plusieurs cycles de rééquilibrage du bain ont été réalisés de façon similaire à plusieurs intervalles. Les résultats obtenus en terme d'efficacité du bain régénéré sont similaires.

La mise en oeuvre du procédé selon l'invention permet de régénérer le bain avec des ajouts de HF et/ou de HNO₃ limités.

La description ci-avant illustre clairement que par ses différentes caractéristiques et leurs avantages, la présente invention atteint les objectifs qu'elle s'était fixés. En particulier, elle propose un procédé de régénération d'une solution usagée d'attaque acide du titane, à base d'acide fluorhydrique et d'acide nitrique, qui est simple à mettre en oeuvre et qui permet une régénération efficace de la solution pour un coût modéré.

## Revendications

1. Procédé de régénération d'une solution usagée d'attaque chimique du titane à base d'acide fluorhydrique et d'acide nitrique, contenant du titane dissous, **caractérisé en ce qu'**il comprend :
- la détermination des concentrations en acide fluorhydrique et en acide nitrique dans la solution,
- la comparaison de chacune des valeurs ainsi mesurées respectivement avec une valeur seuil dite minimale prédéterminée associée,
- et l'addition dans la solution de KF et/ou de KNO₃ lorsque la concentration respectivement en HF et/ou HNO₃ dans la solution est inférieure à la valeur seuil minimale associée, de manière à former respectivement du HF et/ou du HNO₃ dans la solution par réaction avec le titane dissous.

2. Procédé selon la revendication 1, **caractérisé en ce que** les concentrations en HF et HNO₃ dans la solution sont associées chacune respectivement à une valeur seuil dite maximale prédéterminée, et **en ce que** le KF et/ou le KNO₃ sont ajoutés dans la solution dans des quantités telles que les concentrations en HF et HNO₃ dans la solution restent toujours inférieures auxdites valeurs seuils maximales respectivement associées.

3. Procédé selon l'une des revendications 1 ou 2, **caractérisé en ce qu'**il comprend en outre :
- la détermination de la concentration de titane dans la solution,
- la comparaison de la valeur ainsi mesurée avec une valeur limite prédéterminée,
- et lorsque ladite valeur mesurée est supérieure à ladite valeur limite, l'addition dans la solution de KF et de KNO₃.

4. Procédé selon la revendication 3, **caractérisé en ce que** le KF et le KNO₃ sont additionnés en quantités molaires déterminées stoechiométriquement relativement aux réactions de KF et KNO₃ avec le titane dissous.

5. Procédé selon l'une quelconque des revendications 1 à 4, **caractérisé en ce que** la détermination de la concentration des différentes espèces présentes dans la solution est réalisée à partir d'un même échantillon prélevé dans la solution par une même méthode de dosage.

6. Procédé selon la revendication 5, selon lequel la méthode de dosage est une méthode de dosage par titrage acido-basique.

7. Procédé selon la revendication 6, selon lequel le titrage acido-basique est réalisé au moyen d'hydroxyde de tétra-n-butylammonium.

8. Procédé selon l'une quelconque des revendications 1 à 7, **caractérisé en ce que** la solution est maintenue à la température ambiante au moins pendant une période de 2 à 4 heures après l'addition de KNO₃ et/ou de KF.

9. Procédé selon l'une quelconque des revendications 1 à 8, **caractérisé en ce que** la solution est une solution de décapage du titane et les valeurs seuils minimales sont fixées à environ 15 g/l pour l'acide fluorhydrique et environ 287 g/l pour l'acide nitrique, et la valeur limite est fixée à environ 10 g/l pour le titane.

10. Procédé selon l'une quelconque des revendications 1 à 8, **caractérisé en ce que** la solution est une solution d'usinage du titane et les valeurs seuils minimales sont fixées à environ 15 g/l pour l'acide fluorhydrique et environ 100 g/l pour l'acide nitrique, et la valeur limite est fixée à environ 25 g/l pour le titane.

11. Procédé selon l'une quelconque des revendications 1 à 10, **caractérisé en ce qu'**il comporte une étape de séparation d'un précipité d'hexafluorotitanate de potassium formé dans la solution consécutivement à l'addition de KF et/ou de KNO₃.

12. Procédé de maintien en état de fonctionnement d'un bain d'attaque chimique du titane à base d'acide fluorhydrique et d'acide nitrique utilisé de façon sensiblement continue, comprenant la mise en oeuvre d'un procédé de régénération selon l'une quelconque des revendications 1 à 11 sur une fraction isolée dudit bain, et la réintroduction de ladite fraction ainsi régénérée dans ledit bain.

## Patentansprüche

1. Verfahren zur Regenerierung einer gebrauchten chemischen Ätzlösung von Titan auf der Basis von Flusssäure und Salpetersäure, umfassend gelöstes Titan, **dadurch gekennzeichnet, dass** es Folgendes aufweist:
- das Bestimmen der Konzentrationen an Flusssäure und Salpetersäure in der Lösung,
- das Vergleichen jedes der auf diese Weise gemessenen Werte jeweils mit einem zugeordneten, vorgegebenen Mindestschwellenwert
- und das Hinzufügen in die Lösung von KF und/oder KNO₃, wenn die Konzentration jeweils an HF und/oder HNO₃ in der Lösung geringer als der zugeordnete Mindestschwellenwert ist, um jeweils in der Lösung durch Reaktion mit dem gelösten Titan HF und/oder HNO₃ zu bilden.

2. Verfahren nach Anspruch 1, **dadurch gekennzeichnet, dass** die Konzentrationen an HF und HNO₃ in der Lösung jeweils je einem vorgegebenen Maximalschwellenwert zugeordnet werden, und dass KF und/oder KNO₃ in derartigen Mengen in die Lösung hinzugefügt werden, dass die Konzentrationen an HF und HNO₃ in der Lösung immer geringer als die jeweils zugeordneten Maximalschwellenwerte bleiben.

3. Verfahren nach einem der Ansprüche 1 oder 2, **dadurch gekennzeichnet, dass** es ferner Folgendes aufweist:
- das Bestimmen der Konzentration an Titan in der Lösung,
- das Vergleichen des auf diese Weise gemessenen Wertes mit einem vorgegebenen Grenzwert
- und, wenn der gemessene Wert höher als der Grenzwert ist, das Hinzufügen in die Lösung von KF und von KNO₃.

4. Verfahren nach Anspruch 3, **dadurch gekennzeichnet, dass** KF und KNO₃ in molaren Mengen hinzugefügt werden, die stöchiometrisch in Bezug auf die Reaktionen von KF und von KNO₃ mit dem gelösten Titan bestimmt werden.

5. Verfahren nach einem der Ansprüche 1 bis 4, **dadurch gekennzeichnet, dass** das Bestimmen der Konzentration der verschiedenen Spezies, die in der Lösung vorhanden sind, ausgehend von einer gleichen Probe durchgeführt wird, die durch ein gleiches Bestimmungsverfahren aus der Lösung entnommen wird.

6. Verfahren nach Anspruch 5, wobei das Bestimmungsverfahren ein Bestimmungsverfahren durch Säure-Base-Titration ist.

7. Verfahren nach Anspruch 6, wobei die Säure-Base-Titration mittels Tetra-n-butylammoniumhydroxid durchgeführt wird.

8. Verfahren nach einem der Ansprüche 1 bis 7, **dadurch gekennzeichnet, dass** die Lösung mindestens über einen Zeitraum von 2 bis 4 Stunden nach dem Hinzufügen von KNO₃ und/oder KF auf Raumtemperatur gehalten wird.

9. Verfahren nach einem der Ansprüche 1 bis 8, **dadurch gekennzeichnet, dass** die Lösung eine Lösung zur Abbeizung von Titan ist und die Mindestschwellenwerte auf etwa 15 g/l für die Flusssäure und etwa 287 g/l für die Salpetersäure festgelegt werden und der Grenzwert auf etwa 10 g/l für das Titan festgelegt wird.

10. Verfahren nach einem der Ansprüche 1 bis 8, **dadurch gekennzeichnet, dass** die Lösung eine Lösung zur Fräsung von Titan ist und die Mindestschwellenwerte auf etwa 15 g/l für die Flusssäure und etwa 100 g/l für die Salpetersäure festgelegt werden und der Grenzwert auf etwa 25 g/l für das Titan festgelegt wird.

11. Verfahren nach einem der Ansprüche 1 bis 10, **dadurch gekennzeichnet, dass** es einen Schritt des Trennens eines Kaliumhexafluorotitanat-Niederschlags aufweist, der nach dem Hinzufügen von KF und/oder KNO₃ in der Lösung entstanden ist.

12. Verfahren zum Halten eines chemischen Ätzbades des Titans auf der Basis von Flusssäure und Salpetersäure, das im Wesentlichen kontinuierlich verwendet wird, in betriebsfähigem Zustand umfassend das Umsetzen eines Verfahrens zur Regenerierung nach einem der Ansprüche 1 bis 11 auf einer isolierten Fraktion des Bades, und das Wiedereinführen der auf diese Weise regenerierten Fraktion in das Bad.

## Claims

1. Process for the regeneration of a waste solution for chemical attack on titanium based on hydrofluoric acid and on nitric acid, containing dissolved titanium, **characterized in that** it comprises:
- the determination of the concentrations of hydrofluoric acid and of nitric acid in the solution,
- the comparison of each of the values thus measured respectively with an associated predetermined "minimum" threshold value,
- and the addition to the solution of KF and/or of KNO₃ when the concentration respectively of HF and/or HNO₃ in the solution is less than the associated minimum threshold value, so as to respectively form HF and/or HNO₃ in the solution by reaction with the dissolved titanium.

2. Process according to Claim 1, **characterized in that** the concentrations of HF and HNO₃ in the solution are each respectively associated with a predetermined "maximum" threshold value and **in that** the KF and/or KNO₃ are added to the solution in amounts such that the concentrations of HF and HNO₃ in the solution always remain lower than said respectively associated maximum threshold values.

3. Process according to either of Claims 1 and 2, **characterized in that** it additionally comprises:
- the determination of the concentration of titanium in the solution,
- the comparison of the value thus measured with a predetermined limit value,
- and, when said measured value is greater than said limit value, the addition to the solution of KF and of KNO₃.

4. Process according to Claim 3, **characterized in that** the KF and the KNO₃ are added in molar amounts which are stoichiometrically determined relative to the reactions of KF and KNO₃ with the dissolved titanium.

5. Process according to any one of Claims 1 to 4, **characterized in that** the determination of the concentration of the different entities present in the solution is carried out starting from one and the same sample withdrawn from the solution by one and the same assaying method.

6. Process according to Claim 5, according to which the assaying method is a method of assaying by acid/base titration.

7. Process according to Claim 6, according to which the acid/base titration is carried out using tetra(n-butyl)ammonium hydroxide.

8. Process according to any one of Claims 1 to 7, **characterized in that** the solution is maintained at ambient temperature at least for a period of 2 to 4 hours after the addition of KNO₃ and/or KF.

9. Process according to any one of Claims 1 to 8, **characterized in that** the solution is a solution for pickling titanium and the minimum threshold values are set at approximately 15 g/l for the hydrofluoric acid and approximately 287 g/l for the nitric acid, and the limit value is set at approximately 10 g/l for the titanium.

10. Process according to any one of Claims 1 to 8, **characterized in that** the solution is a solution for machining titanium and the minimum threshold values are set at approximately 15 g/l for the hydrofluoric acid and approximately 100 g/l for the nitric acid, and the limit value is set at approximately 25 g/l for the titanium.

11. Process according to any one of Claims 1 to 10, **characterized in that** it comprises a step of separating a potassium hexafluorotitanate precipitate formed in the solution following the addition of KF and/or of KNO₃.

12. Process for keeping in an operating state a bath for chemical attack on titanium based on hydrofluoric acid and on nitric acid which is used substantially continuously, comprising the implementation of a regeneration process according to any one of Claims 1 to 11 on a fraction isolated from said bath and the reintroduction of said fraction thus regenerated into said bath.
